# EUROPÄISCHE PATENTANMELDUNG

(11) **EP 2 249 128 A1**
(43) Veröffentlichungstag der Anmeldung: **10.11.2010**
(21) Anmeldenummer: 09165751.0
(22) Anmeldetag: 17.07.2009
(51) Int. Cl.: G01F 1/684, G01F 1/698, F25J 3/04, G01F 15/08

(54) **Messanordnung und Verfahren zur Erfassung des Fluidstroms der Sumpfflüssigkeit in einer Luftzerlegungsanlage**

(30) Priorität: 08.05.2009 DE 102009002956
(71) Anmelder: Linde Aktiengesellschaft, 80331 München (DE)
(72) Erfinder: Haas, Sebastian, 81377, München (DE)
(74) Vertreter: Patentship

(57) **Zusammenfassung**

Eine Messanordung (1) zur Erfassung eines Fluidstroms (F) durch eine Leitung (2), wie zum Beispiel durch eine Leitung (2) einer kryotechnischen Anlage, weist eine an einer Außenwand (2B) der Leitung (2) angebrachte Heizeinrichtung (3) zum Einbringen von Wärme (W) in das die Leitung (2) durchströmende Fluid (F) auf. Eine an der Außenseite (2B) der Leitung (2) angebrachte Temperaturmesseinrichtung (4) ist zum Erfassen einer Oberflächentemperatur der Leitung (2) vorgesehen.

Bei einem entsprechenden Verfahren wird eine vorgebbare Wärmemenge in ein die Leitung (2) durchströmendes Fluid (F) mittels einer Heizeinrichtung (3) an einer Wärmeeintragsstelle (6) von Außerhalb der Leitung (2) eingebracht. Eine Oberflächentemperatur der Leitung (2) wird an einer Außenseite der Leitung (2) in einem vorgebbaren Abstand (d) von der Wärmeeintragstelle (6) erfasst.

## Beschreibung

Die Erfindung betrifft eine Messanordnung und ein Verfahren zur Erfassung eines Fluidstromes, wie zum Beispiel von einem kryogenen Fluid in einer Luftzerlegungsanlage. Die Erfindung betrifft ferner eine Luftzerlegungsanlage, die es ermöglicht kryogene Fluidströme, beispielsweise von Spül- oder Sumpfflüssigkeiten in Rektifikationssäulen, zu messen oder zu erfassen.

Die allgemeinen Verfahren und Grundlagen beim Aufbau von Rektifikationssystemen im Rahmen der Tieftemperaturzerlegung sind zum Beispiel in der Monographie "Tieftemperaturtechnik" von Hausen/Linde (2. Auflage, 1985) beschrieben. Das Linde-Verfahren zur Luftverflüssigung und Zerlegung ist auch allgemein bekannt.

Neben der Bereitstellung von Stickstoff und Sauerstoffprodukten werden in bestimmten Luftzerlegungsanlagen auch die Edelgase Argon, Krypton und Xenon gewonnen. Zusätzlich zu den Kolonnen oder Rektifikationssäulen zur Stickstoff-Sauerstoff-Trennung sind dann weitere Vorrichtungen oder Komponenten einer entsprechenden kryotechnischen Anlage vorgesehen. Insbesondere bei der Roh-Krypton-Xenon-Gewinnung sammeln sich diese schwer siedenden Edelgasbestandteile der Luft in den Sumpfflüssigkeiten von Rektifikationskolonnen zusammen mit anderen schwer siedenden Verunreinigungen, wie beispielsweise Kohlenwasserstoffen, Kohlendioxid oder auch Stickoxiden.

Damit aus diesen ungewünschten, schwer löslichen Bestandteilen zusammen mit der sauerstoffhaltigen Sumpfflüssigkeit keine möglicherweise zündfähigen Gemische oder Verstopfungen durch Überschreiten der Löslichkeitsgrenze entstehen, muss für eine ausreichende Spülmenge in den Sümpfen entsprechender Rektifikationssäulen gesorgt werden. Dabei ist es insbesondere wünschenswert, auf zuverlässige Weise, die Spülmenge und daher häufig einen entsprechenden Fluidstrom durch eine Leitung, welche beispielsweise zu oder von einem Kolonnensumpf führt, festzustellen. In der Vergangenheit sind lediglich aus der Stellung entsprechender Regelventile ein Fluidstrom und damit eine Spülmenge abgeleitet worden. Bei konventionellen Mengenmessungen auf der Basis von Ultraschalleinstrahlung oder Erfassung der Coriolis-Kraft sind zudem Eingriffe in den Leitungsquerschnitt notwendig, die unerwünscht sind. Allerdings sind derartige bekannte Maßnahmen nur in geringem Maße zuverlässig und hinsichtlich einer quantitativen Erfassung des Fluid- und Spülflüssigkeitsstromes ungenau.

Es ist daher eine Aufgabe der vorliegenden Erfindung, ein Verfahren oder eine Vorrichtung oder eine Anlage zu schaffen, welche ein sicheres Messen oder Erfassen eines Fluidstroms in einer Leitung, insbesondere einer Leitung für kryogenes Fluid, ermöglicht.

Diese Aufgabe wird durch eine Messanordnung gemäß Patentanspruch 1 und ein Verfahren gemäß Patentanspruch 15 gelöst.

Demgemäß ist eine Messanordnung zur Erfassung eines Fluidstromes durch eine Leitung, wie zum Beispiel durch eine Leitung einer kryotechnischen Anlage, vorgeschlagen, welche eine an einer Außenwand der Leitung angebrachte Heizeinrichtung zum Einbringen von Wärme in das Fluid, welches die Leitung durchströmt, aufweist. Die Messanordnung umfasst ferner eine an der Außenseite der Leitung angebrachte Temperaturmesseinrichtung zum Erfassen einer Oberflächentemperatur der Leitung.

Bei einer alternativen Messanordnung zur Erfassung eines Fluidstromes durch eine Leitung, insbesondere durch eine Leitung einer kryotechnischen Anlage, ist eine an einer Außenwand der Leitung angebrachte Kühleinrichtung zum Entziehen von Wärme aus dem Fluid, welches die Leitung durchströmt, vorgesehen. Die Messanordnung umfasst ferner eine an der Außenseite der Leitung angebrachte Temperaturmesseinrichtung zum Erfassen einer Oberflächentemperatur der Leitung.

Bei einem entsprechenden Verfahren zum Erfassen eines Fluidstromes durch eine Leitung, wie zum Beispiel durch eine Leitung einer kryotechnischen Anlage, wie einer Luftzerlegungsanlage, sind die Schritte vorgesehen: Einbringen einer vorgebbaren Wärmemenge in ein die Leitung durchströmendes Fluid mittels einer Heizeinrichtung an einer Wärmeeintragstelle von außerhalb der Leitung. Und Erfassen einer Oberflächentemperatur der Leitung an einer Außenseite der Leitung in einem vorgebbaren Abstand von der Wärmeeintragsstelle.

Alternativ sind bei dem Verfahren zum Erfassen eines Fluidstromes durch eine Leitung, insbesondere durch eine Leitung einer kryotechnischen Anlage, die Schritte vorgesehen: Entziehen einer vorgebbaren Wärmemenge aus einem die Leitung durchströmenden Fluid mittels einer Kühleinrichtung an einer Wärmeaustragsstelle von außerhalb der Leitung. Und Erfassen einer Oberflächentemperatur der Leitung an einer Außenseite der Leitung in einem vorgebbaren Abstand von der Wärmeaustragstelle.

Die vorgeschlagene Messanordnung bzw. das vorgeschlagene Verfahren sieht somit vor, dass Wärme in einen Fluidstrom innerhalb der Leitung eingetragen (oder entzogen) wird. Das Fluid, wie beispielsweise eine Sumpfflüssigkeit bei einer Rektifikationskolonne, wird dabei erwärmt (abgekühlt) und führt zu einer Temperaturerhöhung (Temperaturerniedrigung) im Abstand von der jeweiligen Wärmeeintragsstelle (Wärmeaustragstelle), auch an der jeweiligen Wandung der Leitung. Ist die Leitung zum Beispiel ein Rohr aus einem wärmeleitfähigen Metall, wie Aluminium, ergibt sich in Abhängigkeit von einer Fluidflussgeschwindigkeit eine Temperaturänderung der Rohrwandung und damit der Oberflächentemperatur der Leitung. Durch Erfassen des Wärmeeintrags (oder des Wärmeaustrags) wie auch der Temperaturänderung in einem Abstand flussabwärts an der Leitung kann auf den Fluidstrom quantitativ geschlossen werden.

Insbesondere ist es bei den vorgeschlagenen Maßnahmen nicht notwendig, weitere Rohreinbauten oder Querschnittsveränderungen an den kryotechnischen Leitungen vorzunehmen. Es ist daher ein leichter Umbau oder eine Ergänzung vorhandener kryotechnischer Anlagen, wie Luftzerlegungsanlagen, mit einer vorgeschlagenen Messanordnung möglich. Das Verfahren oder die Messanordnung ähnelt der thermischen Anemometrie. Allerdings fordert beispielsweise die bekannte Hitzdraht- oder Heißfilmanemometrie, dass ein Heizdraht in direktem Kontakt mit dem fluiden Medium gebracht werden muss. Bekannte anemometrische Verfahren oder entsprechende Sensorelemente sind daher nicht zum Einsatz in kryotechnischen Anlagen geeignet, denn ein direkter Eingriff in den Fluidstrom, beispielsweise von flüssigen Sauerstoff aufweisenden Sumpfflüssigkeiten, ist praktisch unmöglich.

Die Messanordnung wird vorzugsweise ausschließlich bei Flüssigkeiten, also beispielsweise bei im Luftzerlegungsprozess vorliegende Sumpfflüssigkeiten, die Sauerstoff, Stickstoff, Krypton, Xenon oder Argon aufweisen, eingesetzt. Die in der Messanordnung eingesetzte Heizeinrichtung kann zum Beispiel eine zeitlich konstante Heizleistung aufweisen, und trägt daher eine konstante Wärmemenge pro Zeiteinheit in das jeweilige Fluid ein. Denkbar ist ebenso, dass die eingesetzte Kühleinrichtung eine zeitlich konstante Kühlleistung hat, und daher eine konstante Wärmemenge pro Zeiteinheit aus dem jeweiligen Fluid oder dem Leitungsmaterial entzieht. Es ergibt sich dann durch Messung der Oberflächentemperatur der Leitung je nach Strömungsgeschwindigkeit oder Durchfluss des kryogenen Fluids durch die Leitung, eine Temperaturänderung. Es ist leicht möglich, die Messanordnung zu kalibrieren, d.h. festzustellen, welche Temperaturänderung oder absolute Temperatur durch die Temperaturmesseinrichtung bei einem vorgegebenen Durchfluss des betrachteten Fluides und bei einer vorgegebenen eingebrachten oder entzogenen Wärmemenge auftreten müssen. Wird eine konstante Heizleistung verwendet und damit eine konstante Wärmemenge in das Fluid eingetragen, nimmt die erfasste Temperatur ab, wenn die Strömungsgeschwindigkeit oder der Durchfluss durch die Leitung erhöht wird. Der Durchfluss bestimmt zusammen mit der Rohrgeometrie die Menge an Fluid, welche durch die Leitung zu oder abgeleitet wird. Analog wird beim Einsatz einer Kühleinrichtung, beispielsweise einem Peltier-Element, gemessen, wie die Strömung den Wärmetransport verändert.

In der Regel wird die Leitungswandung eine höhere Temperatur haben als das Fluid. Allerdings hängt der Wärmeeintrag oder Abtransport immer von der Strömung des Fluids ab, sodass durch Temperaturmessung an der Außenseite der Leitung eine Flusserfassung möglich ist. Eine Beeinflussung der Fluidtemperatur erfolgt in jedem Fall nur sehr begrenzt in der Nähe der Wandung, also einige Zentimeter, vorzugsweise 0,5 cm - 1,0 cm radial in Richtung zur Leitungsmitte entlang der Rohr- oder Leitungsinnnenwandung.

Alternativ kann die Messanordnung derart eingerichtet werden, dass die Heizeinrichtung beispielsweise so angesteuert wird, dass von der Temperaturmesseinrichtung eine konstante Oberflächentemperatur erfasst wird. Es ist zum Beispiel denkbar, eine zusätzliche Regel- oder Steuereinrichtung vorzusehen, die zusammen mit der Messanordnung einen Regelkreis ausbildet. Auch eine Kühleinrichtung kann derart angesteuert werden, dass von der Temperaturmesseinrichtung eine konstante Oberflächentemperatur erfasst wird.

Es ist dabei insbesondere möglich, dass die Heizeinrichtung oder die Kühleinrichtung derart eingerichtet ist, dass die erfasste Oberflächentemperatur geringer ist als eine Siedetemperatur des Fluides. Dadurch wird gewährleistet, dass nur ein derart geringer Temperatureintrag stattfindet, dass der eigentliche kryogene Prozess unbeeinflusst bleibt. Beispielsweise kann der Wärmeeintrag derart eingestellt werden, dass eine Temperaturerhöhung nur in etwa im 0,1 bis 0,5 Kelvinbereich oberhalb von der normalen Fluidtemperatur im Prozess ist.

Bei der Messanordnung werden vorzugsweise die Heizeinrichtung oder die Kühleinrichtung und die Temperaturmesseinrichtung entlang einer Strömungsrichtung des Fluids an einer Außenseite der Außenwand der Leitung in einem vorgegebenen Abstand angebracht. Dabei sind geeignete Abstände und Positionen an den Außenwänden der Leitung möglich. Zum Beispiel kann der Abstand dem Ein- bis Dreifachen des Innendurchmessers der jeweiligen Leitung entsprechen.

Untersuchungen der Anmelderin haben ergeben, dass Abstände zwischen der Wärmeeintrags- bzw. Austragsstelle von 1cm bis 3cm besonders günstig sind.

Vorzugsweise werden die Heizeinrichtung und die Temperaturmesseinrichtung an einem horizontalen Leitungsabschnitt angebracht. Dadurch lässt sich normalerweise vorliegende Konvektion des in der Leitung vorliegenden Fluides weitestgehend ausschließen. Die Heizeinrichtung und die Temperaturmesseinrichtung werden beispielsweise in Bezug auf die Erdbeschleunigung an einer Oberseite der Leitung angebracht. Da auch die Wärme in Bezug auf die Erdbeschleunigung, also nach oben abgeleitet wird, ist es günstig, die Heizeinrichtung und die Temperaturmesseinrichtung an horizontalen Leitungsabschnitten anzubringen.

Entsprechend ist es auch günstig, eine Kühleinrichtung und die Temperaturmesseinrichtung an einem horizontalen Leitungsabschnitt angebracht. Dadurch lässt sich normalerweise vorliegende Naturkonvektion des in der Leitung vorliegenden Fluides weitestgehend ausschließen. Die Kühleinrichtung und die Temperaturmesseinrichtung werden beispielsweise in Bezug auf die Erdbeschleunigung an einer Unterseite der Leitung angebracht. Da die Wärme in Bezug auf die Erdbeschleunigung, also nach oben abgeleitet wird bzw. kühlere Fluidbestandteile absinken, ist es günstig, die Kühleinrichtung und die Temperaturmesseinrichtung an Horizontalen unten anzubringen.

In Alternativen Ausgestaltungen der Messanordnung oder des Verfahrens sind die Heizeinrichtung (oder die Kühleinrichtung) und die Temperaturmesseinrichtung auf einer gemeinsamen Umfangslinie um die Leitung angeordnet, also zum Beispiel auf den Fluidstrom bezogen auf derselben Höhe. Denkbar ist auch eine Anordung der Temperaturmesseinrichtung bezüglich der Heizeinrichtung oder der Kühleinrichtung fluidstromaufwärts. Eine Umfangslinie umschließt die, beispielsweise mit einem kreisrunden Querschnitt ausgeführte, Leitung senkrecht zu einer Längsachse der Leitung derart, dass die Länge der Umfangslinie minimal ist. Insbesondere bei laminaren Strömungen des Fluids durch die Leitung kann ein Wärmeabfluss von der jeweiligen Wärmeeintragsstelle durch das Fluid fluidstromabwärts mit einem Temperatursensor, welcher auf derselben Umfangslinie wie die Heizeinrichtung vorgesehen ist, ermittelt werden. Somit lässt sich dann auch auf den Durchfluss des Fluids durch die Leitung schließen.

Beispielsweise ist die Temperaturmesseinrichtung gegenüber der Heiz- oder Kühleinrichtung auf der gemeinsamen Umfangslinie um einen Winkel versetzt angeordnet. Der Winkel ist von einem Mittelpunkt des der Umfangslinie zugehörigen Kreises aus aufgespannt.

Prinzipiell kann die Temperaturmesseinrichtung in Bezug auf die Wärmeeintragsstelle. Wärmeaustragsstelle, Heizeinrichtung oder Kühleinrichtung auch fluidstromaufwärts vorgesehen werden.

Es wird ferner eine Luftzerlegungsanlage vorgeschlagen, die mindestens eine Rektifikationskolonne aufweist, an die eine Leitung zum Ausschleusen einer Sumpfflüssigkeit der Rektifikationskolonne gekoppelt ist. An die Leitung ist eine wie vorbeschriebene Messanordnung angeordnet. Häufig ist es notwendig, den Spülfluss in Sümpfen von Rektifikationssäulen, die auch als Kolonnen oder Trennsäulen bezeichnet werden, zuverlässig zu schätzen bzw. zu erfassen. Insbesondere bei Anreicherungssäulen für Roh-Krypton-Xenon-Fluide, können sich potenziell den Betrieb der Anlage störende Stoffe in der Sumpfflüssigkeit ansammeln. Diese sind insbesondere CO₂ und N₂O, welche auskristallisieren können, und ungünstigenfalls Messleitungs- oder Kondensatorpassagen verstopfen. Deshalb sollte ausreichend Spülflüssigkeit, also eine notwendige Umwälzung der Sumpfflüssigkeit erfolgen. Dazu kann vorzugsweise eine Messanordnung an einer Ableitung für die Sumpfflüssigkeit dienen.

Insofern dient die Leitung häufig zum Fördern der Sumpfflüssigkeit, welche Sauerstoff, Krypton, Xenon, Kohlenwasserstoffe, Kohlendioxid und Stickoxide aufweist. Ferner kann in der Leitung ein Regelventil vorgesehen werden, welches in Abhängigkeit von der erfassten Oberflächentemperatur und/oder von einer eingebrachten Wärmemenge eine Durchflussmenge des Fluides durch die Leitung einstellt. Eine entsprechend ausgestattete Luftzerlegungsanlage kann dann besonders zuverlässig betrieben werden. Durch Erfassung der Durchflussmenge durch die betrachtete Leitung wird verhindert, dass eine erhöhte Konzentration von ungewünschten Substanzen, wie Kohlenwasserstoffen, im Kolonnensumpf entsteht.

Es ist ferner möglich, ein weiteres Regelventil, insbesondere für einen Zufluss von Fluid in die Kolonne derart zu steuern, dass ein in der Sumpfflüssigkeit vorgesehener Kondensator-Verdampfer vollständig in die Sumpfflüssigkeit eintaucht. Somit lässt sich bei einer Luftzerlegungsanlage, welche mit einer Messanordnung zum Erfassen des Fluidstromes ausgestattet ist bzw. mit einem Verfahren zum Erfassen eines Fluidstromes betrieben wird, zuverlässig der Flüssigkeitsstand bzw. Fluidstand in der jeweiligen Rektifikationskolonne überwachen und einstellen.

Es ist möglich, die Heizeinrichtung mit einem Prozessfluid aus einem Luftzerlegungsprozess zu betreiben, wobei das Prozessfluid eine höhere Temperatur aufweist als die Sumpfflüssigkeit. Beispielsweise können Prozessfluide, wie gekühlte Luft oder gasförmige (Teil-)Produkte, an anderer Stelle der Luftzerlegungsanlage abgezweigt werden und als Heizmedium dienen. Ferner ist es allerdings auch denkbar, eine elektrische Heizeinrichtung, wie eine elektrische Heizung, einzusetzen. Es ist auch denkbar, die Kühleinrichtung mit einem Prozessfluid aus einem Luftzerlegungsprozess zu betreiben, wobei das Prozessfluid eine niedrigere Temperatur aufweist als die Sumpfflüssigkeit. Zum Beispiel kann flüssiger Stickstoff zum Kühlen verwendet werden.

Dabei ist es möglich, kontinuierlich die Wärme einzutragen, also eine zeitlich konstante Temperatur an der Eintragstelle bereitzuhalten. Allerdings ist auch eine gepulste Wärmeeintragung ist möglich. Beispielsweise können in regelmäßigen zeitlichen Abständen die Heizleistung erhöht oder verändert werden, so dass ein gepulster Wärmeeintrag entsteht. Dadurch wird insgesamt die in das kryogene Fluid eingeführte Wärmeenergie vermindert und andererseits der Energieaufwand durch die Messung oder Erfassung des Fluidstromes begrenzt. Auch ein Wärmeaustrag mittels der Kühleinrichtung kann gepulst erfolgen.

Es ist somit möglich, durch die Messanordnung, Flüssigkeits- oder Fluidströme in kryotechnischen Anlagen zu erfassen. Dabei erfolgt eine Erfassung der Strömungsgeschwindigkeit oder eines Durchflusses durch einen Leitungsabschnitt in Abhängigkeit von erfassten Temperaturänderungen and der Leitungsoberfläche. In der Regel weist die Leitung eine höhere Wärmeleitfähigkeit auf als das in ihr transportierte Fluid. Dabei muss die Oberflächentemperatur nicht mit der Fluidtemperatur übereinstimmen. Die Wärmeableitung durch das Fluid hängt allerdings immer von dem Fluidfluss ab. Daher ist die Oberflächentemperatur der Leitung eine günstige Messgröße für den Fluidfluss und schließlich die Durchflussmenge.

Ein die Leitung umgebendes Material kann darüber hinaus als isolierendes Material, zum Beispiel mit Perliten, ausgebildet werden.

Weitere mögliche Implementierungen der Erfindung umfassen auch nicht explizit genannte Kombinationen von zuvor oder im Folgenden bezüglich der Ausführungsbeispiele beschriebenen Merkmale, Verfahrensschritte oder Aspekte. Dabei wird der Fachmann auch Einzelaspekte als Verbesserungen oder Ergänzungen zu der jeweiligen Grundform der Erfindung hinzufügen.

In einer Variante der Erfindung ist ein Computerprogrammprodukt vorgesehen, welches die Durchführung eines entsprechenden Verfahrens zum Erfassen eines Fluidstroms auf einer programmgesteuerten Rechner- oder Steuereinrichtung veranlasst. Als programmgesteuerte Rechner- oder Steuereinrichtung kommt zum Beispiel ein PC oder ein Rechner einer Leitwarte zur Steuerung und Regelung von Anlagen, insbesondere Luftzerlegungsanlagen, in Frage, auf dem entsprechende Software installiert ist. Das Computerprogrammprodukt kann beispielsweise in der Art eines Datenträgers wie zum Beispiel USB-Stick, Floppy-Disk, CD-ROM, DVD implementiert werden oder auch auf einer Servereinrichtung als herunterladbare Programmdatei implementiert sein.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigt dabei:
Fig. 1: eine schematische Darstellung einer ersten Messanordnung zum Erfassen eines Fluidflusses;
Fig. 2: eine schematische Darstellung einer zweiten Messanordnung zum Erfassen eines Fluidflusses;
Fig. 3: eine schematische Darstellung einer dritten Messanordnung zum Erfassen eines Fluidflusses;
Fig. 4: eine schematische Darstellung eines Teils einer Luftzerlegungsanlage mit einer zweiten Messanordnung zum Erfassen eines Spülflusses für einen Sumpf einer Rektifikationssäule; und
Fig. 5: ein beispielhaftes Verfahrensfließbild einer Luftzerlegungsanlage, welche mit einer Messanordnung zum Erfassen eines Fluidflusses ausgestattet werden kann.

In den Figuren sind gleiche oder funktionsgleiche Elemente mit denselben Bezugszeichen versehen worden, sofern nichts anderes angegeben ist.

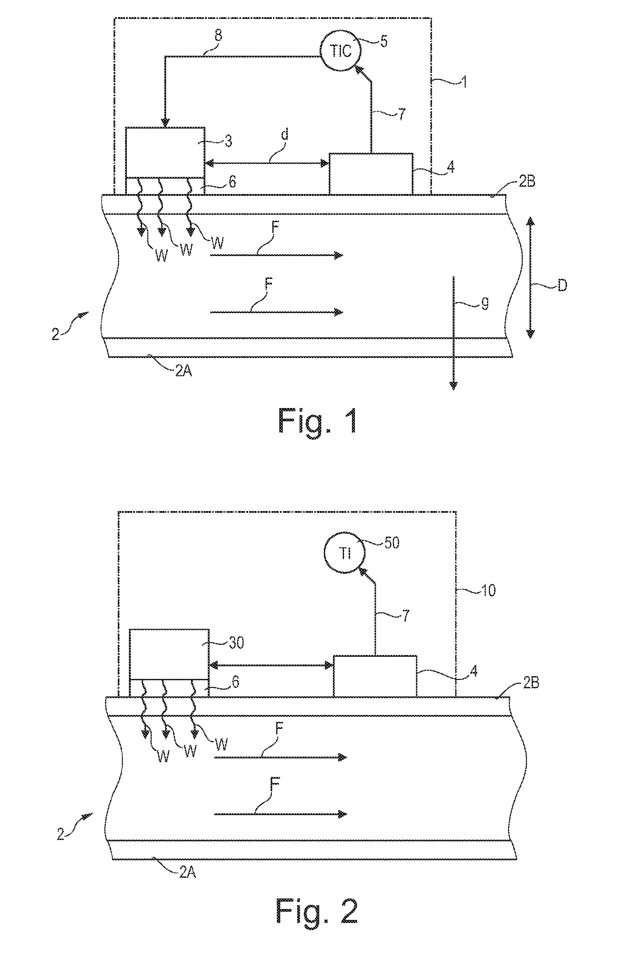

In der Figur 1 ist eine Messanordnung zum Erfassen eines Fluidflusses an einer Leitung schematisch dargestellt. Eine Leitung bzw. eine Rohrleitung 2 ist im Querschnitt mit einer oberen und einer unteren Leitungswand 2A, 2B dargestellt. In der Figur 1 ist die Erdbeschleunigung g zur Referenzierung als Pfeil dargestellt. Die Leitung 2 kann beispielsweise ein Prozessfluid in einem kryogenen Prozess fördern, wie zum Beispiel eine Sumpfflüssigkeit von einer Rektifikationskolonne. Das Fluid ist dabei zum Beispiel in flüssigem Aggregatzustand und umfasst hauptsächlich eine Mischung aus Sauerstoff, Krypton und Xenon. Ferner können Verunreinigungen vorliegen. Der Fluidfluss bzw. der Fluss der kryogenen Flüssigkeit ist als Strömungspfeile F angedeutet. In der Orientierung der Figur 1 strömt somit eine kryogene Flüssigkeit von links nach rechts in der Leitung 2.

Es wird nun an einer Wärmeeintragsstelle 6 der oberen Außenwand 2B der Leitung 2 Wärme W eingebracht. Dies ist über die geschlängelten Pfeile W dargestellt. Die Wärmeeintragsstelle 6 ist beispielsweise über ein wärmeleitendes Material 6 ausgebildet, auf das eine Heizung 3 angebracht ist. Die Heizung 3, beispielsweise eine elektrische Heizung, erwärmt somit die obere Wand 2B und damit mittelbar die in der Rohrleitung 2 fließende Flüssigkeit.

In einem vorgegebenen Abstand d entlang der Strömungsrichtung F ist ebenfalls an der oberen Außenwand 2B der Leitung 2 eine Temperaturmesseinrichtung 4 bzw. ein Temperaturmessfühler oder Sensor angebracht. Der Temperaturmesssensor 4 liefert Messsignale 7 an eine Temperatursteuereinrichtung 5, welche Steuersignale 8 an die Heizeinrichtung 3 sendet. Das in der Figur 1 dargestellte Beispiel einer Messanordnung 1 zum Erfassen des Fluidstromes F umfasst somit im Wesentlichen die Heizung 3, den Temperaturmessfühler 4 und die Steuereinrichtung 5.

In Bezug auf den Innendurchmesser D der Rohrleitung 2 ist der Abstand d zwischen der Heizeinrichtung 3 und dem Temperaturmessfühler 4 in einem anzupassenden Verhältnis vorgesehen. Beispielsweise kann der Abstand d dem Rohrdurchmesser D entsprechen. Üblich sind zum Beispiel einige 5 bis 10 cm für den Rohrinnendurchmesser D und den Abstand d. Jedoch kann für die jeweilige Temperaturmessung und eingesetzte Wärmequelle der jeweilige Abstand optimiert werden. Denkbar sind Verhältnisse von d/D = 2-3. In einer anderen Ausführungsform der Messanordnung beträgt der Abstand zwischen dem Temoperaturmessfühler 4 und der Heizeinrichtung 3 oder

Die schematisch dargestellte Heizeinrichtung 3 kann elektrisch betrieben werden, jedoch auch durch ein weiteres Fluid aus einem Luftzerlegungsprozess, welches eine höhere Temperatur als das geförderte Fluid F aufweist. Wird die Leitung 2 zur Ableitung von einer Sumpfflüssigkeit einer Roh-Krypton-Xenon-Kolonne verwendet, bietet sich zum Beispiel flüssiger Stickstoff aus dem Luftzerlegungsprozess als Heizmedium an. Es können auch andere Wärmeerzeugungsmechanismen wie Reibungswärme oder Druckwärme in der Heizeinrichtung 3 verwendet werden.

Ferner ist es möglich, mehrere einzelne Wärmequellen anzuordnen, um den Eintrag in die fließende Flüssigkeit zu optimieren. Denkbar ist zum Beispiel eine Umbauung des Rohres oder der Leitung mit Wärmequellen entlang einer Umfangslinie der Leitung. Die typischen Temperaturen liegen beispielsweise bei etwa -180 bis 190°C.

Die Regeleinrichtung 5 ist bei manchen Ausführungsbeispielen derart eingestellt, dass jeweils eine konstante Temperatur von dem Temperaturmesssensor 4 gemessen wird. Das bedeutet, dass eine höhere elektrische Leistung von der Heizeinrichtung 3 benötigt wird, je größer der Durchfluss durch die Leitung ist. Die eingestrahlte Wärmemenge W wird durch Konvektion im Fluid F entlang der Strömung abgeleitet und erzeugt eine Erwärmung, insbesondere der oberen Wandung 2B an der Stelle des Temperaturmesssensors 4. Ferner kann berücksichtigt werden, dass die Leitungswandung 2A oder 2B selbst eine Wärmeleitung hat, die unabhängig von dem Fluidstrom ist. Figur 1 zeigt den Vektor der Erdbeschleunigung g, um auf Oben und Unten referenzieren zu können. Der Pfeil g zeigt nach unten.

Bei der Konfiguration der Figur 1 steuert der Temperaturregler 5 kontinuierlich die Wärmequelle bzw. Heizung 3 derart, dass zum Beispiel die von dem Temperatursensor 4 gemessene Temperatur jeweils 0,2 K über der Temperatur des Fluides an der Wärmeeintragstelle 6 ist. Es ist dabei ferner denkbar, dass weitere Temperaturfühler stromaufwärts vorgesehen werden, die in der Figur 1 nicht näher dargestellt sind. Dadurch kann eine Temperaturdifferenz ermittelt werden.

Üblicherweise sind Rohrleitungen innerhalb der Coldbox einer kryotechnischen Anlage, wie einer Luftzerlegungsanlage, aus Aluminium gefertigt. Es sind jedoch auch andere Materialien wie Kupfer oder Edelstahl mit einer höheren Wärmeleitfähigkeit denkbar. Im Vergleich zur Umgebung hat Aluminium eine relativ hohe Wärmeleitung, die größer ist als die des transportierten Fluids F. Als Umgebung kann wärmeisolierendes Material aus Keramik oder Stein eingesetzt werden. Üblich ist das Material Perlit als Isolierung.

Falls in dem Beispiel der Figur 1 keine Strömung besteht, ist die von der Wärmequelle bzw. Heizung 3 eingetragene Wärmeenergie W in das Fluid minimal, aber auf jeden Fall geringer als bei einer vorliegenden Strömung F. Falls kein Fluidstrom besteht, kann lediglich durch Naturkonvektion innerhalb des Fluides und durch das Leitungsmaterial selbst in der Umgebung der Wärmeeintragstelle 6 eine Wärmeleitung entstehen. Wenn Strömung herrscht, erfolgt der maßgebliche Wärmeeintrag, Wärmetransport oder Wärmeübertrag durch Konvektion. Ohne wesentliche Strömung geschieht der Wärmeübertrag als normale Wärmeleitung.

Die durch Konvektion an die Fluidströmung abgegebene Wärme hängt von der Wärmeübergangszahl α ab, welche eine Funktion der Strömungsgeschwindigkeit V ist: α = α(V). Es ergibt sich die eingetragene Wärmemenge als: Q = α × A × t × ΔT, wobei Q die Wärmemenge ist, α die Wärmeübergangszahl, A die Fläche der Wärmeeintragstelle, t die Zeit, während der eine Temperaturdifferenz ΔT zwischen Fluid und Heizung besteht. Insofern ergibt sich als mögliches Messsignal für den Fluidstrom und damit auch für den Flüssigkeitsdurchsatz durch die Leitung oder die Massenmenge durch die Leitung, die von der Heizung aufgenommene (zum Beispiel elektrische) Leistung. Durch eine entsprechende Kalibrierung der Messanordnung 1 kann daher von der (elektrischen) Leistung der Heizeinrichtung 3 auf den Fluiddurchfluss geschlossen werden. Eine Eichung oder Kalibrierung kann rechnerisch oder einfach vor Ort erfolgen. Bei einem Betrieb mit konstanter Ventilstellung in der jeweiligen Leitung und konstantem Drücken bei Zu- und Abfluss, besteht die Möglichkeit der Eichung der Messanordnung. In der Regel liegen vorwiegend laminare Strömungen vor, allerdings kann das vorgeschlagene Verfahren auch bei turbulenten Strömungseigenschaften eingesetzt werden.

In der Figur 2 ist eine alternative Ausführung der Messanordnung, wie sie im Wesentlichen in der Figur 1 beschrieben ist, schematisch dargestellt. Auf gleiche Elemente wird im Folgenden nicht weiter eingegangen. Während bei der Konfiguration der Figur 1 die Heizleistung derart geregelt wird, dass immer eine konstante Temperatur vom Messfühler 4 aufgezeichnet wird, sieht die Messanordnung 10 der Figur 2 vor, dass immer eine konstante (elektrische) Leistung von der Heizeinrichtung 30 bereitgestellt wird. Somit wird zeitlich immer ein konstanter Wärmeeintrag W über die Eintragstelle 6 in die Fluidströmung F eingeführt. Durch die Aufzeichnung der Temperatur mittels des Messfühlers 4 kann eine Umrechnung oder Abbildung auf den Fluidstrom F als Funktion der erfassten Temperatur erfolgen. Ein Vorteil gegenüber der Anordnung aus Figur 1 ist eine ruhigere Außentemperatur (Messsignal 7). Das in der Figur 1 dargestellte Beispiel kann unter Umständen durch den Regelkreis aufschwingen, wodurch das Messsignal (Leistungsaufnahme der Heizung) unruhiger wäre. Allerdings hat die Figur 1 den Vorteil, dass der Wärmeeintrag minimiert würde. Weitere Implementierungen einer Messanordnung bzw. eines Verfahrens zum Bestimmen des Durchflusses auf Basis eines Wärmeeintrages, Konvektion und Temperaturmessen von Außen an einer Rohrwandung, sind ebenfalls möglich.

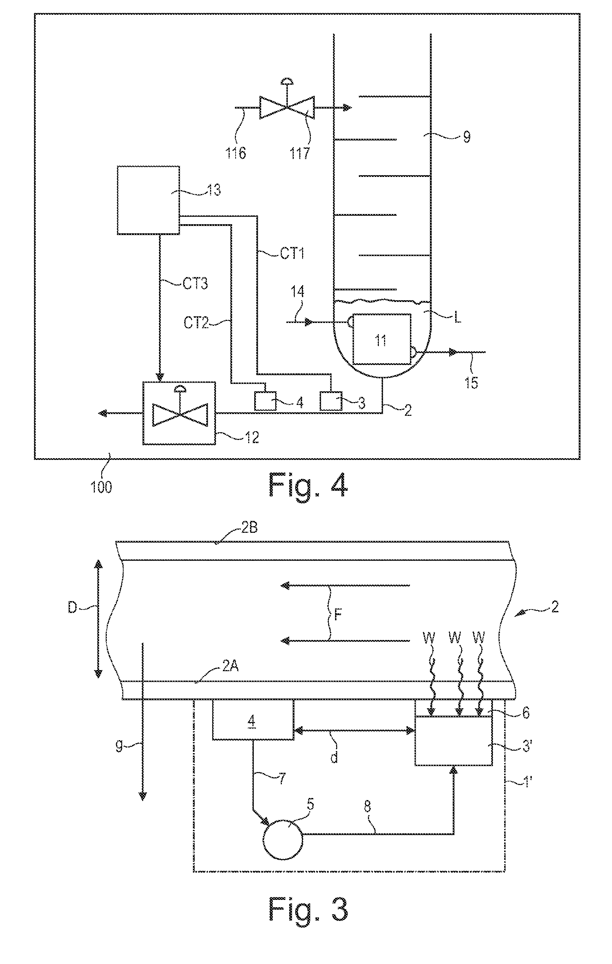

Die Figur 3 zeigt eine dritte Ausführungsform der Messanordnung, die eine Kühleinrichtung 3' anstelle einer Heizung 3 gemäß der vorherigen Figuren verwendet. Die übrigen Elemente sind im Wesentlichen wie es in Bezug auf die Figur 1 beschrieben ist, schematisch dargestellt. Da kühle Fluidanteile absinken ist die Kühleinrichtung 3', zum Beispiel ein Peltier-Element, wie auch der Temperaturmessfühler 4 an der Unterseite 2A der Leitung 2 angebracht. Analog der Ausführung mit einer Heizung erfolgt eine Bestimmung der Durchflussmenge oder der Fluidströmung anhand der durch das Fluid abgeleiteten Wärme von der Außenwand der Leitung. Die Kühleinrichtung kann auch mit einem Prozessfluid als Kühlmedium betrieben werden. Grundsätzlich gilt das für den Wärmequellenbetrieb Gesagte analog für eine Kühleinrichtung.

Die Figur 4 zeigt einen Teil einer Luftzerlegungsanlage mit einer Messanordnung zum Erfassen der Spülmenge für den Sumpf einer Rektifikationskolonne oder Trennsäule. In der Figur 4 sind lediglich einige Elemente einer Luftzerlegungsanlage 100 angedeutet.

Es ist eine Rektifikationskolonne 9 dargestellt, die beispielsweise eine Roh-Krypton-Xenon-Säule bei der Krypton-Xenon-Produktion darstellt. Es sind zum Beispiel mehrere Siebböden oder Packungen vorgesehen, wobei im Sumpf der Kolonne in der Sumpfflüssigkeit L ein Kondensator-Verdampfer 11 vorgesehen ist. Der Kondensator-Verdampfer 11 hat einen Zufluss 14 und einen Abfluss 15. In der Sumpfflüssigkeit L einer entsprechenden Roh-Krypton-Xenon-Säule 9 sammeln sich schwerer siedende Bestandteile der Luft, wie auch verunreinigende Kohlenwasserstoffe oder CO₂, N₂O etc. Die Sumpfflüssigkeit L weist meist einen hohen Anteil flüssigen Sauerstoff und schwerflüssigen Edelgasanteile neben den Verunreinigungen auf. Im nicht dargestellten Kopf der Rektifikationskolonne ist eine Gasabzugsleitung vorgesehen und im unteren Teil Flüssigkeitszuführungsleitungen. Darüber hinaus können weitere Fluidzuführungen 116 in oberen Bereichen der Kolonne 9 vorliegen. Die Zuführung von Fluid wird zum Beispiel mit einem Regelventil 117 realisiert.

Der zum Beispiel als Plattenwärmetauscher ausgebildete Kondensator 11 kann mit Stickstoff aus dem Kopf einer Drucksäule mit Prozessluft oder Gas einer Rohargonsäule beheizt werden und ist in die Sumpfflüssigkeit L eingetaucht. Das entsprechende Roh-Krypton-Xenon-Produkt wird über einer Abflussleitung 2 aus dem Sumpf der Säule oder Kolonne 9 abgezogen und dient gleichzeitig der Spülung des Kondensatorbades. In Abhängigkeit von dem Spülfluss durch die Leitung 2 wird die Konzentration von potenziell den Betrieb störende Kohlenwasserstoffen oder anderen Verunreinigungen bestimmt. Es ist wünschenswert, die Konzentration von beispielsweise CO₂ und N₂O in der Sumpfflüssigkeit oder Spülflüssigkeit L gering zu halten, da insbesondere CO₂ und N₂O Mischkristalle bilden können, deren Löslichkeit in dem Kondensatorbad geringer ist als die einzelnen Löslichkeiten der Stoffe. Es kann dann zu einer Verstopfung von Kondensatorpassagen oder Messleitungen kommen, was zu verhindern ist. Die potenziell vorliegenden Kohlenwasserstoffe könnten ab einer gewissen Konzentration zündfähige Gemische in dem hoch sauerstoffhaltigen Fluid- oder Flüssigkeitsbad bilden. Kristallisiert beispielsweise Acetylen C₂H₂ aus, kann ein exothermer Zerfall auftreten, der als Zündquelle für andere vorliegende Kohlenwasserstoffe denkbar ist. Es ist daher durch Messung der Spülmenge bzw. des Fluiddurchflusses durch die Abflussleitung 2 möglich, ein eingesetztes Regelventil 12 derart anzusteuern, dass diese unerwünschten Zustände verhindert werden. Durch die Überwachung und Erfassung der Spülmenge bzw. des Fluiddurchflusses durch die Leitung 2 wird somit verhindert, dass es durch Verstopfungen oder Querschnittsverengungen in den Wärmetauscherpassagen des Kondensators 11 zum Zünden von Kohlenwasserstoffen kommen könnte.

Es ist beispielsweise ein Steuer- oder Leitstellenrechner 13 für die Luftzerlegungsanlage 100 vorgesehen, der Mess- oder Steuersignale CT1 von mindestens einer Heizeinrichtung 3, welche an die Oberfläche der Leitung 2 gekoppelt ist, Mess- oder Steuersignale CT2 von einem Temperaturmesssensor 4, der in einem vorgegebenen Abstand ebenfalls an der Außenseite der Leitung 2 angebracht ist empfängt, und der Steuersignale CT3 an das Regelventil 12 zur Einstellung des Durchflusses durch die Leitung 2 bestimmt. Dadurch können kritische Situation durch unbekannten Spülfluss vermieden werden.

Die Spülflüssigkeit L ist in der Regel deutlich unterkühlt, d.h. mehrere Kelvin unterhalb des Siedepunktes, so dass auch durch die geringe Wärmezufuhr durch die Heizung 3, beispielsweise mit einer Leistung in der Größenordnung von 1 Watt, immer noch unterhalb der Siedetemperatur des Spülmediums, also der Sumpfflüssigkeit L liegt. Durch Überwachung der Temperatur durch den Messfühler 4 ergibt sich wie vorbeschrieben hinsichtlich der Figuren 1 und 2 die Möglichkeit, eine präzise Abschätzung oder Abbildung auf einen Flüssigskeitsdurchfluss in der Leitung 2 vorzunehmen. Die Messung des Durchflusses der kryogenen Flüssigkeit mittels begrenztem vorsichtigen Wärmeeintrag, ist dabei genauer und sicherer als Beispielsweise eine konventionelle Messung mit Ultraschall an der Fluidströmung. Dies ist insbesondere der Fall, weil nur eine besonders geringe Energie in die kryogene Flüssigkeit eingebracht wird.

Insbesondere der Einsatz einer Messanordnung mit einem Heizelement und einem Temperatursensorelement an der Außenseite, beispielsweise einer Rohrleitung, hat den Vorteil, dass keine Flansch- oder Schweißverbindungen notwendig sind. Daher kann die vorgeschlagene Messanordnung bei bereits in Betrieb gesetzten kryotechnischen Anlagen, wie Luftzerlegungsanlagen, leicht nachgerüstet werden. Es erfolgen keine Änderungen des Rohrquerschnittes oder der Rohrgeometrie der jeweiligen Leitung, so dass durch die Messung mittels Wärmeenergieeintrag keine zusätzlichen prozesstechnischen Änderungen notwendig werden. Auch ist die eingetragene Energiemenge absolut unbedenklich. Es ist eine kostengünstige und einfache Kalibrierung oder Eichung des Messverfahrens bzw. der eingesetzten Messanordnung möglich. Somit wird insbesondere beim Einsatz bei der Krypton-Xenon-Anreicherung in einer Trennsäule eine zuverlässige Überwachung und Einstellung des Spülflusses möglich.

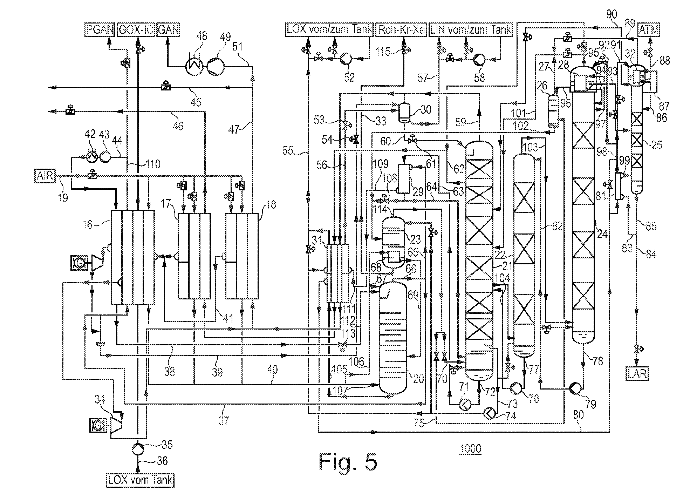

In der Figur 5 ist ein beispielhaftes Verfahrensfließbild für eine Luftzerlegungsanlage, insbesondere auch zur Krypton/Xenon-Erzeugung schematisch dargestellt. Luftzerlegungsanlage 1000 ist dabei zum Beispiel, wie in der DE 103 32 863 A1 beschrieben ist, ausgeführt.

Es wird verdichtete und gereinigte Umgebungsluft (AIR) über die Leitung 19 eingeführt und in dem dreiteiligen Wärmetauschersystem 16, 17, 18 auf den Taupunkt abgekühlt. Die entsprechend gereinigte und gekühlte Luft 40 wird einerseits gasförmig in die Hochdrucksäule 20 eines Rektifiziersystems zur Stickstoff-Sauerstoff-Trennung eingeführt. Das Stickstoff-Sauerstoff-Trennsystem umfasst dabei eine Niederdrucksäule 21 und einen Hauptkondensator (Kondensator-Verdampfer) 29. Von der Hochdrucksäule 20 wird vom Kopf gasförmiger Stickstoff 66 abgezogen und teilweise durch die Leitung 65 in den Hauptkondensator 29 geleitet. Das Kondensat wird über die Leitung 109 der Hochdrucksäule 20 als Rücklauf zugeführt. Ein weiterer Teil wird über die Leitung 111 in einem Unterkühlungsgegenströmer 31 unterkühlt und über die Leitung 56 und das Drosselventil 53 in einen Abscheider 3 eingespeist. Ein Teil der Flüssigphase des Abscheiders 30 wird über die Leitung 60 und ein Ventil 61 der Niederdrucksäule 21 am Kopf zugeführt. Ferner wird flüssiges Stickstoffprodukt (LIN) über die Leitung 57 abgezweigt. Ein weiterer Teil des gasförmigen Stickstoffes wird über die Leitung 37 zum Hauptwärmetauscher 16 geführt und in etwa auf Umgebungstemperatur angewärmt. Über die Leitung 110 kann dieser Stickstoff als Druckprodukt (PGAN) abgezogen werden.

Die sauerstoffangereicherte Sumpfflüssigkeit 105 der Hochdrucksäule 20 wird im Unterkühlungsgegenströmer 31 abgekühlt und in einen Reinargonverdampfer 61 geführt. Diese unterkühlte, sauerstoffangereicherte, kryogene Flüssigkeit, die schwersiedende Krypton-Xenon-haltige Fraktionen enthält, wird über die Leitung 98 in den Verdampfungsraum des Kondensator-Verdampfers 28, welcher einen Kopfkondensator des Rohargonrektifikationssystems 22, 24 bildet, eingeführt. Ferner wird über die Leitung 91 die Flüssigkeit in den Verdampfungsraum eines Kopfkondensators 32 einer Reinargonsäule 25 abgeleitet. In dem Verdampfer 28 wird die Krypton- und Xenonhaltige Fraktion partiell verdampft. Ein Teil wird als Spülflüssigkeit über die Leitung 96 aus dem Verdampfungsraum des Kondensatorverdampfers 28 abgezogen. In der Spülflüssigkeit wird daher die Konzentration der schwer flüchtigen Komponenten wie Krypton und Xenon erhöht. Insbesondere an der Leitung 26 kann zur Kontrolle des Spülflusses für den Kondensatorverdampfer 28 eine, wie in den vorhergehenden Figuren 1-4 dargestellte, Messanordnung eingesetzt werden. Allerdings ist auch an anderen Stellen der Luftzerlegungsanlage 1000 das Anbringen einer Messanordnung zur Fluiddurchflussmessung möglich.

Die Spülflüssigkeit wird über die Leitung 96 einer Zusatzsäule 26 zugeführt. In der Zusatzsäule 26 wird der Stickstoffgehalt der Spülflüssigkeit nochmals reduziert. Anschließend wird die gereinigte Spülflüssigkeit über die Leitung 102 einer Krypton-Xenon-Anreicherungssäule 23 zugeführt. In der Krypton-Xenon-Anreicherungssäule 23 ist ein Sumpfverdampfer 68 vorgesehen. Dieser kann mit einer geeigneten Fraktion bzw. einem in der Luftzerlegungsanlage vorliegenden Prozessfluid betrieben werden. Beispielsweise wird gemäß der in der Figur 4 gezeigten Anordnung über die Leitung 106 die vorgekühlte Prozessluft verwendet. Die in dem Sumpfverdampfer 68 verflüssigte Luft wird in die Hochdrucksäule 20 eingeleitet. In den Kopf der Krypton-Xenon-Anreicherungssäule 23 wird über die Leitung 65 ein Teilstrom von flüssigem Sauerstoff eingesetzt, der über eine Pumpe 74 auf Druck gebracht wird.

Damit innerhalb der Krypton-Xenon-Anreicherungssäule 23 oder in den an dem entsprechenden Fluidtransport beteiligten Leitungen keine potenziell zündfähigen Gemische auftreten, ist es günstig, die Spülung durch die Sumpfflüssigkeit zuverlässig zu regeln. Beispielsweise kann insbesondere das Ventil 115 an der Leitung 33 in Abhängigkeit von einem erfassten Fluidstrom durch die Leitung 33 oder auch die Leitung 102 eingestellt werden. Das Krypton-Xenon-Konzentrat als Sumpfflüssigkeit in der Säule 23 kann, wie zuvor beschrieben ist, Bestandteile von Kohlenwasserstoffen, Stickoxiden oder Kohlendioxid aufweisen. Damit beispielsweise keine kombinierten Kohlendioxid-Stickoxid-Kristalle Leitungen oder Kondensatorkanäle verstopfen, wird für eine ausreichende Spülung gesorgt. Insofern kann zum Beispiel an der Leitung 33 die in der Figur 4 dargestellte Mess- und Regelanordnung vorgesehen werden. Die entsprechende Überwachung und Auswertung der betrachteten Messsignale erfolgt von einem - hier nicht explizit dargestellten - Leitstellenrechner der Anlage 1000, der entsprechend programmiert wurde.

Das an der Leitung 33 vorliegende Kondensat, welches als Roh-Kr-Xe bezeichnet ist, umfasst größtenteils Sauerstoff und Krypton in einem Gehalt von etwa 4000 ppm und Xenon in einem Gehalt von 400 ppm. Dieses Produkt kann zur weiteren Verarbeitung verwendet werden.

Die in der Figur 5 dargestellte Luftzerlegungsanlage 1000, welche zur Krypton-Xenon-Erzeugung geeignet ist, wird daher vorzugsweise mit einer oder mehreren Messanordnungen zur Erfassung der jeweiligen Fluidströme mit Spülflüssigkeiten ausgestattet. Dadurch wird verhindert, dass den Betrieb der Anlage 1000 beeinträchtigende Situationen durch Anreicherung von Kohlenwasserstoffen oder potenziell zündfähigen Gemischen in den Spülfluiden auftreten können. Durch eine entsprechende Regelung wird ferner dafür gesorgt, dass zum Beispiel die Verdampfer-Kondensatoren 28 oder 68 immer vollständig im Sumpfflüssigkeitsbad vorliegen. Insgesamt führen die vorgeschlagenen Maßnahmen zu einer verbesserten Sicherheit von kryotechnischen Anlagen.

Die Durchführung des Verfahrens bzw. der angesprochenen Verfahrensschritte lässt sich jeweils durch die in dem Verfahrensfließbildern und schematischen Darstellungen der Messanordnungen oder der Luftzerlegungsanlagen gezeigten Einrichtungen implementieren. Dabei ist dem Fachmann klar, welche Verfahrenssteile welcher Einrichtung zugeordnet sind. Demgemäß sind die Einrichtungen derart ausgestaltet das jeweilige Verfahrensschritte oder -Teile umgesetzt und durchgeführt werden. Die Koordinierung erfolgt dabei zum Beispiel durch einen entsprechenden Leitstellenrechner.

### Bezugszeichenliste:

- 1, 1', 10: Messanordnung
- 2: Leitung
- 2A: untere Außenseite
- 2B: obere Außenseite
- 3: Heizeinrichtung
- 3': Kühleinrichtung
- 4: Temperaturmesseinrichtung
- 5: Temperaturregler
- 6: Wärmeleiter
- 7: Messleitung
- 8: Steuerleitung
- 9: Rektifikationskolonne
- 11: Kondensor-Verdampfer
- 12: Regelventil
- 13: Steuereinrichtung, Leitstellenrechner
- 14: Leitung
- 15: Leitung
- 16, 17, 18: Hauptwärmetauscher
- 19: Luftleitung
- 20: Hochdrucksäule
- 21: Niederdrucksäule
- 22, 24: Argonrektifikationssystem
- 23: Kr-Xe-Säule
- 25: Rein-Ar-Säule
- 26: Zusatzsäule
- 27: Leitung
- 28: Kopf-Kondensator-Verdampfer
- 29: Hauptkondensator
- 30: Abscheider
- 31: Gegenstromkühler
- 32: Kopf-Kondensator-Verdampfer
- 33: Roh-Kr-Xe-Leitung
- 34: Stickstoffturbine
- 35: Pumpe
- 36-41: Leitung
- 42: Nachlaufkühler
- 43: Verdichter
- 44-47: Leitung
- 49: Verdichter
- 48: Nachlaufkühler
- 50: Wärmeeintragregler
- 51: Leitung
- 52: Verdichter
- 53, 54: Regelventil
- 55: Leitung
- 56, 57: Leitung
- 58: Verdichter
- 59, 60: Leitung
- 61: Regelventil
- 62-67: Leitung
- 68: Sumpfverdampfer
- 69, 70: Leitung
- 71: Pumpe
- 72, 73: Leitung
- 74: Pumpe
- 75: Leitung
- 76: Pumpe
- 77, 78: Leitung
- 79: Pumpe
- 80: Leitung
- 81: Reinargonverdampfer
- 82-99: Leitung
- 100: Luftzerlegungsanlage
- 101-107: Leitung
- 108: Regelventil
- 109-112: Leitung
- 113: Regelventil
- 114: (Spülflüssigkeits-)Leitung
- 115: Regelventil
- 1000: Luftzerlegungsanlage
- 116: Zuleitung
- 117: Regelventil

- L: Sumpfflüssigkeit
- d: Abstand
- D: Innendurchmesser
- g: Erdbeschleunigung
- TIC: Temperaturregler
- TI: Wärmeeintragregler
- W: Wärmeeintrag
- F: Fluidstrom
- CT1-CT3: Steuerleitung

## Patentansprüche

1. Messanordung (1) zur Erfassung eines Fluidstroms (F) durch eine Leitung (2), insbesondere durch eine Leitung (2) einer kryotechnischen Anlage, mit einer an einer Außenwand (2B) der Leitung (2) angebrachten Heizeinrichtung (3) zum Einbringen von Wärme (W) in das die Leitung (2) durchströmende Fluid (F), und mit einer an der Außenseite (2B) der Leitung (2) angebrachten Temperaturmesseinrichtung (4) zum Erfassen einer Oberflächentemperatur der Leitung (2).

2. Messanordnung (10) nach Anspruch 1, wobei die Heizeinrichtung (3) eine zeitlich konstante Heizleistung hat und eine konstante Wärmemenge pro Zeiteinheit einträgt.

3. Messanordnung (1) nach Anspruch 1 oder 2, wobei die Heizeinrichtung (3) derart eingerichtet ist, dass von der Temperaturmesseinrichtung (4) eine konstante Oberflächentemperatur (4) erfasst wird.

4. Messanordnung (1) nach einem der Ansprüche 1 - 3, wobei die Heizeinrichtung (3) derart eingerichtet ist, dass die erfasste Oberflächentemperatur geringer ist als eine Siedetemperatur des Fluids.

5. Messanordnung (1) nach einem der Ansprüche 1 - 4, wobei die Heizeinrichtung (3) und die Temperaturmesseinrichtung (4) entlang einer Strömungsrichtung des Fluids (F) an einer Außenseite der Außenwand (2B) der Leitung (2) in einem vorgegebenen Abstand (d) angebracht sind.

6. Messanordnung (1) nach Anspruch 5, wobei der Abstand (d) einem 1-fachen bis 3-fachen des Innendurchmessers (D) der Leitung entspricht.

7. Messanordnung (1) nach einem der Ansprüche 1 - 6, wobei die Heizeinrichtung (3) und die Temperaturmesseinrichtung (4) an einem horizontalen Leitungsabschnitt angebracht sind.

8. Messanordnung (1) nach einem der Ansprüche 1 - 7, wobei die Heizeinrichtung (3) und die Temperaturmesseinrichtung (4) auf einer Oberseite (2B) der Leitung (2) in Bezug auf die Erdbeschleunigung (g) angebracht sind.

9. Messanordnung (1) nach einem der Ansprüche 1 - 8, wobei die Heizeinrichtung (3) und die Temperaturmesseinrichtung (4) auf einer gemeinsamen Umfangslinie an der Leitung (2) angebracht sind.

10. Luftzerlegungsanlage (100) mit mindestens einer Rektifikationskolonne (9), an die eine Leitung (2) zum Ausschleusen einer Sumpfflüssigkeit (L) der Rektifikationskolonne (9) gekoppelt ist, wobei an der Leitung (2) eine Messanordnung (1) nach einem der Ansprüche 1 - 9 angeordnet ist.

11. Luftzerlegungsanlage (100) nach Anspruch 10, wobei die Leitung (2) zum Fördern der Sumpfflüssigkeit (L), welche Sauerstoff, Krypton, Xenon, Kohlenwasserstoffe, Kohlendioxid und Stickoxide aufweist, ausgestaltet ist.

12. Luftzerlegungsanlage (100) nach Anspruch 10 oder 11, wobei die Rektifikationskolonne (9) als Kr-Xe-Anreicherungssäule zur Bereitstellung eines Roh-Kr-Xe-Produktes ausgebildet ist.

13. Luftzerlegungsanlage (100) nach einem der Ansprüche 10 - 12, wobei in der Leitung (2) ein Regelventil (12) vorgesehen ist, welches in Abhängigkeit von der erfassten Oberflächentemperatur und/oder einer eingebrachten Wärmemenge eine Durchflussmenge des Fluids durch die Leitung (2) einstellt.

14. Luftzerlegungsanlage (100) nach einem der Ansprüche 10 - 13, wobei die Heizeinrichtung (3) mit einem Prozessfluid aus einem Luftzerlegungsprozess betrieben wird.

15. Verfahren zum Erfassen eines Fluidstroms (F) durch eine Leitung (2), insbesondere durch eine Leitung (2) einer kryotechnischen Anlage, umfassend:
Einbringen einer vorgebbaren Wärmemenge in ein die Leitung (2) durchströmendes Fluid (F) mittels einer Heizeinrichtung (3) an einer Wärmeeintragsstelle (6) von Außerhalb der Leitung (2); und
Erfassen einer Oberflächentemperatur der Leitung (2) an einer Außenseite der Leitung (2) in einem vorgebbaren Abstand (d) von der Wärmeeintragstelle (6).
